# EUROPEAN PATENT APPLICATION

(11) **EP 2 228 927 A1**
(43) Date of publication of application: **15.09.2010**
(21) Application number: 09305228.0
(22) Date of filing: 12.03.2009
(51) Int. Cl.: H04J 3/06

(54) **Method for processing distributed data having a chosen type for synchronizing communication nodes of a data packet network, and associated device**

(71) Applicant: Alcatel Lucent, 75008 Paris (FR)
(72) Inventor: Le Pallec, Michel, 91620, NOZAY (FR); Dupas, Arnaud, 91620, NOZAY (FR)
(74) Representative: Sciaux, Edmond

(57) **Abstract**

A method is intended for processing distributed data of a chosen type in a data packet network comprising communication nodes (N1-N5). This method comprises the steps of:
- receiving a plurality of packets, comprising data of the chosen type and sent at regular time intervals by a source communication node (N1),
- assessing a packet delay variation of each of these received packets,
- selecting a subset of these received packets according to their respective assessed packet delay variations, and
- synchronizing a destination communication node (N5) of the data packet network by means of timing information derived from the selected subset.

## Description

The present invention relates to data packet networks (or packet switched networks (PSNs)), and more precisely to processing of distributed data having a chosen type in a data packet network.

As it is known by the man skilled in the art, some protocols are used for transmitting chosen information between communication nodes that are connected to a data packet network. This is notably the case of time distribution protocols, such as those referenced IETF NTPV4 (Network Time Protocol) and IEEE 15881/2. It is recalled that these above mentioned time distribution protocols are intended for supporting the distribution of time and frequency in the context of stringent applications such as mobile network applications (base station synchronization, for instance). For instance a time distribution protocol is used for transmitting information messages (or packets) at regular intervals from a server (or master or source communication node) to clients (or slaves or destination communication nodes) in order to synchronize the client clocks with the server clock. More precisely, a client needs to receive a minimal number of (good or pertinent) information messages (or packets) from a server, during a given time interval, to synchronize its clock with the server clock,

In the context of data packet networks, the performance of some protocols, and notably the time distribution protocols, is limited by the Packet Delay Variation (PDV).

In order to face this PDV dependency, some filtering algorithms, relying on packets experiencing the minimum path delay, can be deployed in the communication nodes in order to be used when these communication nodes act as clients (or destination communication nodes) in a server/client (or master/slave) approach.

Moreover, a dedicated polling algorithm can be also triggered by a client in order to increase the rate of the information messages (or packets), that are sent at regular intervals by the server (or source (communication node)) to the clients, according to the number of relevant or selected information messages (or packets) required for synchronizing the client clock with the server clock. Indeed, increasing the source information message rate should in theory increase the probability of having more information messages (or packets) with a low transmission delay and thus with a limited cumulated PDV at the client level. However, this server/client "polling" approach is inherently limited by the "synchronization" bandwidth used for transmitting the information messages, and therefore the information message rate cannot be indefinitely increased. So, it appears some limitations when high traffic loads occur (especially in congestion conditions). In such conditions, a strong increase of the information message rate would be welcome in order to enable selection of a sufficient amount of "good" information messages (or packets) for synchronizing the client clocks. Unfortunately, increasing the synchronization bandwidth degrades the congestion or high traffic load state.

Transparent clocks have been proposed to solve this last issue in the context of IEEE1588V2. In fact these transparent clocks measure the transit time of the information messages (or packets) while crossing a network element, and these measurements are transmitted to the clients (according to IEEE 1588V2). By the way, the packet delay variation can be corrected for each information message (or packet) without any increase of the information message rate. Nevertheless, this solution requires some specific and costly hardware at the node ingress/egress (or input/output). Moreover, the interest of such a solution is not obvious regarding packet loss occurring during high traffic loads. Indeed, information messages (or packets) are rarely alone in high priority queues (where they are temporarily stored with OAM (Operation And Maintenance) data and control packets, for instance), before being forwarded.

It has been also proposed to increase the polling time of the NTP polling algorithm for some specific conditions impacting the Packet Delay Variation (such as high burstiness and congestion) in order to avoid the selection of non relevant packets. But in this case the client clock is in a free running state for a given time, with an unwishable frequency drift (depending on the oscillator quality).

It has been also proposed to detect un-relevant information messages (or packets) and to shift from one server to another one, with a likely avoidance of "bad" paths impacting the PDV and thus the synchronization performance. Nevertheless, this approach is topology dependent and the result is not guaranteed, especially when the congestion is close to the client clock or is generalized to all paths.

Finally, it has been also proposed to define a cascade topology, in which each node is a NTP stratum with an accurate clock, or a boundary clock for IEEE 1588V2, in order to solve the PDV dependencies. But this notably increases the deployment cost.

So the object of this invention is to offer a new solution intended for improving the situation in data packet networks.

For this purpose, the invention provides a method intended for processing distributed data of a chosen type in a data packet network comprising communication nodes. Such a method comprises the steps of:
- receiving a plurality of packets, comprising data of the chosen type and sent at regular (emission) time intervals by a source communication node,
- assessing a packet delay variation of each of these received packets,
- selecting a subset of these received packets according to their respective assessed packet delay variations, and
- synchronizing a destination communication node of the data packet network by means of timing information derived from the selected subset.

The method according to the invention may include additional characteristics considered separately or combined, and notably:
- one may select received packets if their assessed packet delay variations are smaller than a chosen first threshold;
- when the distributed data of the chosen type are received by a communication node into a flow further comprising distributed data of at least one other type, one may first de-multiplex these distributed data of the chosen type and the distributed data of at least one other type, then one may select received packets amongst the distributed data of the chosen type, and one may multiplex these selected received data with the distributed data of at least one other type to transmit these multiplexed data to another communication node;
- when packets received by a communication node during a chosen observation time interval have been selected, one may compare the number of these selected packets with a chosen second threshold, and if this number is smaller than this second threshold one may request the source communication node to decrease the regular (emission) time intervals;
   ➢ the chosen second threshold may depend on the communication node for which received packets have been selected during a chosen observation time interval;
   ➢ when one receives several requests associated to different communication nodes, one may select (or prioritize) the request which is associated to the communication node which is the least downstream from the source communication node;
- in a variant, when packets received by a communication node have been selected during the last observation time interval, one may compare the number of these selected received packets with a chosen second threshold, and if this number is smaller than this second threshold one may compute a ratio between this number and the number of packets received by this communication node and selected during the observation time interval having preceded the last observation time interval, then one may compare this computed ratio with a third threshold, and if this computed ratio is smaller than this third threshold (for instance in case of congestion detection) one may increase (or relax) (because of the PDV degradation) the value of the chosen first threshold that has been used during the packet selection;
- one may synchronizes local clocks, that are used for assessing the packet delay variations, by means of a chosen frequency reference, in order to improve the accuracy of the assessed packet delay variation;
- if the number of selected packets is greater than a fourth threshold, which is greater than or equal to the minimal number of (good or pertinent) packets that are necessary to a destination communication node to synchronize its (client) clock with a master (or server) clock, a request may be sent to the source communication node in order to inform it that its transmission (or emission) rate should be decreased for the concerned client node.

The invention also offers a device intended for processing distributed data of a chosen type in a data packet network comprising communication nodes. Such a device comprises:
- a computation means arranged, when an associated communication node receives packets comprising data of the chosen type and sent at regular (emission) time intervals by a source communication node, for assessing a packet delay variation of each of these received packets, and
- a selection means arranged for selecting a subset of these received packets according to their respective assessed packet delay variations, in order these selected received data be transmitted to another communication node by said associated communication node.

The device according to the invention may include additional characteristics considered separately or combined, and notably:
- its selection means may be arranged for selecting packets whose assessed packet delay variation is smaller than a chosen first threshold;
- it may further comprise i) a de-multiplexing means arranged, when the distributed data of the chosen type are received by its associated communication node into a flow further comprising distributed data of at least one other type, for de-multiplexing the distributed data of the chosen type and the distributed data of at least one other type, in such a way that the selection means proceeds to selection of at least some of these received packets amongst the distributed data of the chosen type, and ii) a multiplexing means arranged for multiplexing these selected received data with the distributed data of at least one other type and for ordering to its associated communication node to transmit these multiplexed data to another communication node. After de-multiplexing, a positioning marker may be inserted in the non monitored packet flow in order to ease the multiplexing of the selected packets in a real time approach;
- its selection means may be arranged, when it has selected received packets during a chosen observation time interval, for comparing the number of received packets it has selected during this chosen observation time interval with a chosen second threshold, and if this number is smaller than this second threshold for requesting the source communication node to decrease the regular (emission) time intervals (i.e. to increase the transmission rate of the considered packets);
- in a variant, its selection means may be arranged, when it has selected received packets during the last observation time interval, for comparing the number of received packets it has selected during this last observation time interval with a chosen second threshold, and if this number is smaller than this second threshold for computing a ratio between this number and the number of received packets it has selected during the observation time interval having preceded the last observation time interval, then for comparing this computed ratio with a third threshold, and if this computed ratio is smaller than this third threshold for increasing (or relaxing) the value of the chosen first threshold.

The invention also offers a communication node, intended for being connected to a data packet network, and comprising a device such as the one above introduced.

The invention is particularly well adapted, but not exclusively, to selection of packets comprising data representative of timing information. Moreover, the invention is particularly well adapted, but not exclusively, to transmission of packets according to a time distribution protocol.

Other features and advantages of the invention will become apparent on examining the detailed specifications hereafter and the appended drawings, wherein:
- figure 1 schematically illustrates a part of a data packet network comprising communication nodes equipped with an example of embodiment of a device according to the invention, and
- figure 2 schematically illustrates the processing method which is implemented within a device illustrated in figure 1.

The appended drawings may serve not only to complete the invention, but also to contribute to its definition, if need be.

The invention aims at offering a method and an associated device (D) intended for processing distributed data of a chosen type in a data packet network to allow synchronization of communication nodes (Ni).

In the following description it will be considered, only as example, that the data packet network is a mobile network comprising client communication nodes (Ni) such as base stations to be synchronized. But the invention is not limited to this type of data packet network. Indeed it concerns any type of data packet network or packet switched network (PSN).

Moreover, in the following description it will be considered, only as example, that the distributed data are representative of timing information and are transmitted into "timing" packets (or messages) according to a time distribution protocol, such as IEEE 1588V2, for instance. But the invention is neither limited to this type of distributed data nor limited to this type of protocol. Indeed it concerns any type of data packet or message representative of application(s)/protocol(s) with a packet delay variation or transmission delay sensitivity/dependency.

As mentioned above, the invention proposes a method intended for processing distributed data of a chosen type in a data packet network comprising communication nodes.

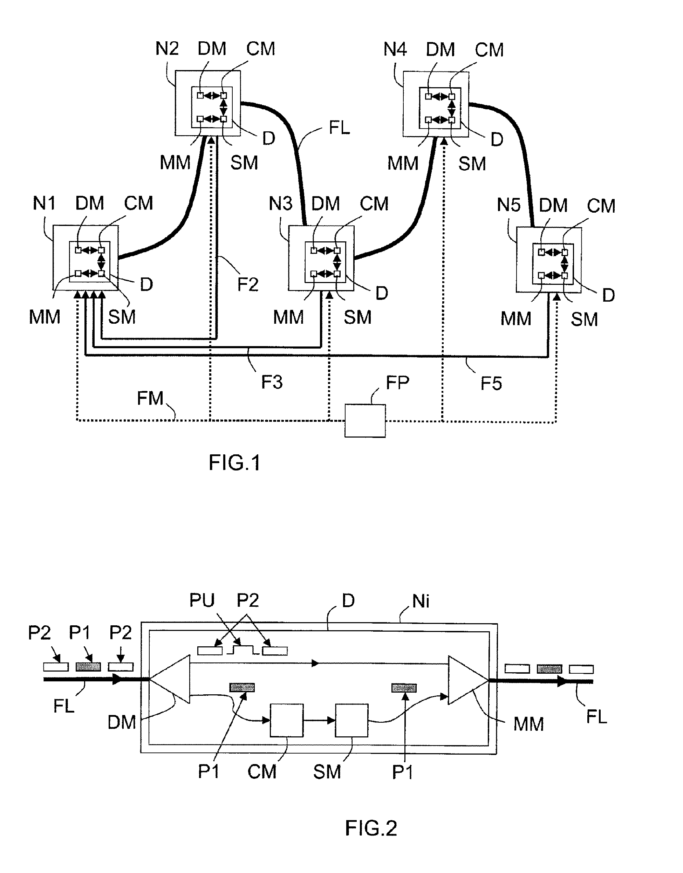

A part of a data packet network comprising five communication nodes Ni (i = 1 to 5) is illustrated in figure 1. It is important to note that the invention applies to data packet networks comprising at least three communication nodes Ni. For instance, at least some communication nodes Ni may be base stations of a radio access network.

The processing method according to the invention comprises at least four main steps. This processing method can be implemented when a communication node, for instance N1, hereafter called "server", generates packets (or messages) P1 comprising data of a chosen type and sends these generated packets at regular (emission) time intervals to at least one communication node, for instance N5, hereafter called "client", via at least one other communication node Ni' (i' ≠1 and 5) of the data packet network. In the following description it will be considered as example that the generated packets (or messages) P1 comprise data representative of timing information (for instance a timestamp indicating when they have been generated in the server clock reference frame). So, the packets (or messages) P1, generated by the server N1 at regular intervals, will be called "timing packets" hereafter.

For instance the duration of the regular (emission) time interval may be initially (or by default) equal to 10 ms. This corresponds to an initial (or by default) transmission rate of 100 timing packets P1 per second.

A first main step consists in receiving a plurality of timing packets P1 sent at regular (emission) time intervals by a server (or source communication node) N1.

A second main step consists in assessing the packet delay variation (or PDV) of each of the timing packets P1 received during the first main step. Any technique known by the man skilled in the art and allowing to determine or estimate packet delay variations can be used.

A third main step consists in selecting a subset of the timing packets P1, received during the first main step, according to their respective assessed packet delay variations.

A fourth main step consists in synchronizing a destination communication node (or client) N5 of the data packet network by means of timing information derived from the selected subset.

At least the second and third main steps can be implemented by means of devices D according to the invention which are associated respectively to the communication nodes Ni, and notably to the intermediate ones (here N2 to N4) that are located on the path of the timing packets P1 between the server N1 and the client N5.

In the non limiting example illustrated in figures 1 and 2 each communication node Ni is equipped with a device D according to the invention. But this is not mandatory. Indeed a device D can be a network element which is connected to an associated communication node Ni. What is important is that a device D be capable of accessing to the packets that are received in a transparent manner by its associated communication node Ni.

In case where the device D is located into a communication node Ni, it is preferably made of software modules, at least partly. But it could be also made of electronic circuit(s) or hardware modules, such as a programmable component like FPGA, or a combination of hardware and software modules. Such a device D should preferably embed some memories in order to be able to store some data, such as packet count or calculated ratios.

As illustrated in figures 1 and 2, a device D according to the invention comprises at least a computation module CM and a selection module SM. It is important to note that the server N1 does not require to be associated with a device D.

The computation module CM intervenes when its associated communication node Ni receives timing packets P1 sent at regular (emission) time intervals by a server N1. Each time this situation occurs, it (CM) assesses (i.e. determines or estimates) the packet delay variation (PDV) of each of the received timing packets P1.

This PDV assessment (determination or estimation) can be performed as mentioned hereafter.

A k-th timing packet P1, coming from a server (or timing source) N1, arrives to the device D at a time (t0 + kΔT + PDV(k)), where ΔT is the polling interval (i.e. the regular (emission) time interval between two transmitted timing packets P1) and PDV(k) is the delay variation of this k-th timing packet P1 relatively to a minimum delay t0 which can be estimated by the device D (and more precisely its computation module CM) after a (short) convergence period (packet analysis).

Each device D comprises a local clock allowing its computation module CM to assess each packet delay variation.

Usually the timing packets P1 are multiplexed into a flow FL with packets (or messages) P2 of at least one other type, for instance OAM (Operations And Maintenance) packets, hereafter called traffic packets. So, in order the computation module CM be able to assess the PDV of the timing packets P1, the latter must have been extracted from the flow FL. This extraction can be performed by a de-multiplexing means DM which can be a part of the device D, as illustrated. But it could be also a part of the associated communication node Ni.

This de-multiplexing means DM can be a de-multiplexer which is arranged, when its associated communication node Ni receives a flow FL of multiplexed timing packets P1 and traffic packets P2, for de-multiplexing them and therefore placing the traffic packets P2 on a first output and the timing packets P1 on a second output, as illustrated in figure 2. Also as illustrated in figure 2, each extracted timing packet P1 can be replaced with a pulse PU into its original flow FL in order to mark its original positioning within the whole packet flow.

It is important to note that each de-multiplexed timing packet P1 is preferably associated with a positioning marker defining its original location into its flow FL (for instance between two traffic packets P2, as illustrated in figure 2) in order to be later re-introduced into this flow FL at its original location if it is selected by the selection module SM (as explained hereafter).

The selection module SM is arranged for selecting a subset of the received timing packets P1 according to their respective packet delay variations (assessed by the computation module CM), in order these selected timing packets P1 be transmitted to another communication node Ni' (i' ≠i) (in fact the one which is the next on the path of the timing packets towards the client N5), by its associated (intermediate) communication node Ni.

So, the selection module SM selects some (possibly everyone) of the received timing packets P1 in order these selected timing packets P1 continue to be transmitted towards the client N5, while the received timing packets P1 that are not selected are suppressed.

Each selection can be performed by the selection module SM by means of a comparison between the assessed PDV of a received timing packet P1 and a chosen first threshold. If the assessed PDV of a received timing packet P1 is smaller than the chosen first threshold then this received timing packet P1 is selected by the selection module SM.

For instance the first threshold may be initially (or by default) equal to 10 µs per communication node Ni.

It is important to note that the first threshold may be the same for all the devices D associated respectively to the different communication nodes Ni or it may possibly vary from one device D associated to a communication node Ni to another one associated to another communication node Ni' (i' ≠i).

When the timing packets P1 are multiplexed with packets (or messages) P2 of at least one other type into an original flow FL, the selected timing packets P1 must be re-introduced into their original flow FL at their respective original locations. This re-introduction can be performed by a multiplexing means MM which can be a part of the device D, as illustrated. But it could be also a part of the associated communication node Ni.

This multiplexing means MM can be a multiplexer which is arranged for multiplexing the traffic packets P2 of an original flow FL with the selected timing packets P1. As illustrated in figure 2, this multiplexing may consist in reintroducing each selected timing packet P1 into its original flow FL at its original location, which is defined by its associated positioning marker, for instance. The re-introduction of a selected timing packet P1 into its original flow FL may consist in "replacing" the pulse PU, having been positioned at its original location, with this selected timing packet P1.

Once a selected timing packets P1 has been re-introduced into its original flow FL it may be transmitted by the associated communication node Ni to another communication node Ni' (i' ≠i) which is the next one on the path of the timing packets towards the client N5.

It is important to note that each timing packet P1, which has been selected in an intermediate communication node Ni (for instance N2) and re-introduced into its original flow FL at its original location, will be processed again (for instance compared) by the device D associated to the intermediate communication node Ni' (for instance N3) which is the next (or following) one on the path of the timing packets P1 towards the client N5. So, a timing packet P1 is processed and selected each time a device D considers that its PDV remains smaller than the first threshold it uses. So, it may be processed and selected a lot of time (while meeting all first thresholds) if there are a lot of intermediate communication nodes Ni between the server N1 and the client N5. It is important to note that PDV is usually cumulative and therefore the first thresholds should be preferably incremental from the server to the client nodes.

In a first example of embodiment, when the device D of a communication node Ni has selected timing packets P1 during a chosen observation time interval having a chosen duration, for instance equal to some seconds, it (D) may compare the number of received timing packets P1 it has selected during this chosen observation time interval with a chosen second threshold. If this number is smaller than this second threshold one may request the server N1 to decrease its regular (emission) time intervals (i.e. to increase the packet transmission rate of the server N1).

Each comparison can be performed by the selection module SM of a device D. In the same way, each request following a comparison can be generated by the selection module SM of a device D. The generated request is then transmitted by the associated communication node Ni to the server N1. In figure 1, requests are represented by arrows F2, F3 and F5. It is important to note that the client N5 may also request (F5) the server N1 to decrease its regular (emission) time intervals.

If the server N5 receives several requests from different communication nodes Ni (as illustrated in figure 1), it may select (or prioritize) the request which is associated to the communication node Ni which is the least downstream from it on the path of the flow FL. For instance, in the non limiting example illustrated in figure 1, the server N5 receives requests F2, F3 and F5 respectively from the intermediate communication nodes N2 and N3 and from the client N5. The intermediate communication node N2 being the least downstream from the server N1 on the path of the flow FL, this server N1 will first take into consideration the request F2 transmitted by this intermediate communication node N2. If this request (which requires an increase of the transmission (or emission) rate) cannot be satisfied by the server N1, this latter (N1) may use its maximum transmission rate or some other actions may be taken (such as monitoring the selection conditions for all nodes, for instance).

It is also important to note that the second threshold may be the same for all the devices D associated respectively to the different communication nodes Ni or it may possibly vary from one device D associated to a communication node Ni to another one associated to another communication node Ni' (i' ≠i). In other words its value may depend on the associated communication node Ni.

For instance the value of the second threshold may be initially (or by default) equal to 75 timing packets P1 per second when the initial (or by default) transmission rate is equal to 100 timing packets P1 per second.

In a second example of embodiment, when the device D of a communication node Ni has selected timing packets P1 during the last observation time interval (t) having the chosen duration, it (D) may compare the number n(t) of timing packets P1 it has selected during this observation time interval (t) with a chosen second threshold. As mentioned above, the second threshold may be the same for all the devices D associated respectively to the different communication nodes Ni or it may possibly vary from one device D associated to a communication node Ni to another one associated to another communication node Ni' (i' #i).

If this number n(t) is smaller than the second threshold the device D may compute a ratio R between this number n(t) and the number n(t-1) of packets received by its associated communication node Ni and selected during the observation time interval (t-1) having preceded the last observation time interval (t). Then the device D may compare this computed ratio R (= n(t) /n(t-1)) with a local third threshold. If this computed ratio R is smaller than the local third threshold, the device D may increase the value of the chosen first threshold that has been used during the timing packet selection.

Each comparison can be performed by the selection module SM of a device D. in the same way, each modification of the local first threshold following two comparisons can be locally performed by the selection module SM of a device D.

It is important to note that the local third threshold may be the same for all the devices D associated respectively to the different communication nodes Ni or it may possibly vary from one device D associated to a communication node Ni to another one associated to another communication node Ni' (i' ≠i). In other words its value may depend on the associated communication node Ni.

As illustrated in figure 1, the data packet network may comprise a network equipment FP intended for synchronizing the local clocks of each device D (used for accurately assessing locally the packet delay variations) and the local clock of the server N1 with a chosen frequency reference. This synchronization can be done by means of dedicated messages FM transmitted to the communication nodes Ni by the network equipment FP. The chosen frequency reference can be of any type. So it can be produced by a local oscillator having a high stability or by a radio navigation system (such as GPS (Global Positioning System), for instance). Such an optional synchronization aims at controlling the accuracy of the packet delay variation assessment. So, it may allow the use of low cost local oscillators (or local clocks) into the devices D.

In case where the number of selected packets is greater than a fourth threshold, which is greater than or equal to the minimal number of (good or pertinent) packets that are necessary to a client node to synchronize its client clock CC with the server clock SC, a request may be sent to the server N1 in order to inform it that its transmission (or emission) rate should be decreased for the concerned client node. Preferably, this last request is sent by the concerned client node to the server N1. Also preferably this last request comprises a value representative of the difference between the fourth threshold and the number of selected packets that have been received by a client node, in order the server N1 be able to decrease precisely its transmission rate.

The invention is not limited to the embodiments of method, device and communication node described above, only as examples, but it encompasses all alternative embodiments which may be considered by one skilled in the art within the scope of the claims hereafter.

## Claims

1. A method of processing distributed data of a chosen type in a data packet network comprising communication nodes (Ni), said method being **characterized in that** it comprises the steps of:
- receiving a plurality of packets, comprising data of the chosen type and sent at regular time intervals by a source communication node (N1),
- assessing a packet delay variation of each of said received packets,
- selecting a subset of said received packets according to their respective assessed packet delay variations, and
- synchronizing a destination communication node (N5) of said data packet network by means of timing information derived from said selected subset.

2. Method according to claim 1, wherein one selects received packets if their assessed packet delay variations are smaller than a chosen first threshold.

3. Method according to one of claims 1 and 2, wherein, when the distributed data of said chosen type are received by a communication node (Ni) into a flow further comprising distributed data of at least one other type, one first de-multiplexes said distributed data of said chosen type and said distributed data of at least one other type, then one selects received packets amongst said distributed data of said chosen type, and one multiplexes said selected received data with said distributed data of at least one other type to transmit these multiplexed data to another communication node (Ni').

4. Method according to one of claims 1 to 3, wherein, when a communication node (Ni) of said data packet network has selected received packets during a chosen observation time interval, one compares the number of received packets it has selected during said chosen observation time interval with a chosen second threshold, and if this number is smaller than said second threshold a request is sent to the source communication node (N1) to decrease said regular time intervals.

5. Method according to claim 4, wherein said chosen second threshold depends on the communication node (Ni) for which received packets have been selected during a chosen observation time interval.

6. Method according to one of claims 4 and 5, wherein, when one receives several requests associated to different communication nodes (Ni), one selects or prioritizes the request which is associated to the communication node (Ni) which is the least downstream from said source communication node (N1).

7. Method according to one of claims 2 and 3, wherein, when packets received by a communication node (Ni) have been selected during the last observation time interval, one compares the number of said selected received packets with a chosen second threshold, and if this number is smaller than said second threshold one computes a ratio between this number and the number of packets received by said communication node (Ni) and selected during the observation time interval having preceded the last observation time interval, then one compares this computed ratio with a third threshold, and if this computed ratio is smaller than said third threshold one increases the value of said chosen first threshold that has been used during the packet selection.

8. Method according to one of claims 1 to 7, wherein one synchronizes local clocks, that are used for assessing said packet delay variations, by means of a chosen frequency reference, in order to improve the accuracy of the assessed packet delay variation.

9. Method according to one of claims 1 to 8, wherein, when the number of selected packets is greater than a fourth threshold, which is greater than or equal to a minimal number of packets that are necessary to a destination communication node (N5) to synchronize its clock with a master clock, one sends a request to said source communication node (N1) in order to inform it that its transmission rate should be decreased for said destination communication node (N5).

10. Device (D) for processing distributed data of a chosen type in a data packet network comprising communication nodes (Ni), **characterized in that** it comprises:
- a computation means (CM) arranged, when an associated communication node (Ni) receives packets comprising data of the chosen type and sent at regular time intervals by a source communication node (N1), for assessing a packet delay variation of each of said received packets, and
- a selection means (SM) arranged for selecting a subset of said received packets according to their respective assessed packet delay variations, in order these selected received data be transmitted to another communication node (Ni') by said associated communication node (Ni).

11. Device according to claim 10, wherein said selection means (SM) is arranged for selecting received packets whose assessed packet delay variation is smaller than a chosen first threshold.

12. Device according to one of claims 10 and 11, further comprising i) a de-multiplexing means (DM) arranged, when the distributed data of said chosen type are received by said associated communication node (Ni) into a flow further comprising distributed data of at least one other type, for de-multiplexing said distributed data of said chosen type and said distributed data of at least one other type, in order said selection means (SM) proceed to selection of at least some of said received packets amongst said distributed data of said chosen type, and ii) a multiplexing means (MM) arranged for multiplexing said selected received data with said distributed data of at least one other type and for ordering to said associated communication node (Ni) to transmit these multiplexed data to another communication node (Ni').

13. Device according to one of claims 10 to 12, wherein said selection means (SM) is arranged, when it has selected received packets during a chosen observation time interval, for comparing the number of received packets it has selected during said chosen observation time interval with a chosen second threshold, and if this number is smaller than said second threshold for requesting said source communication node (N1) to decrease said regular time intervals.

14. Device according to one of claims 11 and 12, wherein said selection means (SM) is arranged, when it has selected received packets during the last observation time interval, for comparing the number of received packets it has selected during said last observation time interval with a chosen second threshold, and if this number is smaller than said second threshold for computing a ratio between this number and the number of received packets it has selected during the observation time interval having preceded the last observation time interval, then for comparing this computed ratio with a third threshold, and if this computed ratio is smaller than said third threshold for increasing the value of said chosen first threshold.

15. Communication node (Ni) intended for being connected to a data packet network, **characterized in that** it comprises a device (D) according to one of claims 10 to 14.

16. Use of the method according to one of claims 1 to 9, the device (D) according to one of claims 10 to 14, and the communication node (Ni) according to claim 15 for selecting packets comprising data representative of timing information.

17. Use according to claim 16 for transmitting packets according to a time distribution protocol.
